# EUROPEAN PATENT APPLICATION

(11) **EP 4 662 999 A1**
(43) Date of publication of application: **17.12.2025**
(21) Application number: 25175067.5
(22) Date of filing: 08.05.2025
(51) Int. Cl.: A01D 34/00, B60L 50/52

(54) **A ROBOTIC LAWN MOWER WITH WHEEL BRUSH DEVICE**

(30) Priority: 14.06.2024 SE 2450657
(71) Applicant: Husqvarna AB, 561 82 Huskvarna (SE)
(72) Inventor: Emme, Linus, Huskvarna (SE); Stoffers, Marcus, Huskvarna (SE); Hjelmåker, Olle, Huskvarna (SE)

(57) **Abstract**

The present disclosure relates to a robotic lawn mower (100) comprising a body (140), at least one pair of drive wheels (131A, 131B), at least one swivelable wheel (130A, 130B), at least one rotatable grass cutting disc (160), having a disc rotation axle (165) that is adapted to rotate about a disc rotation axis (164), and at least one wheel brush device (150A, 150B) for each drive wheel (131A, 131B). Each wheel brush device (150A, 150B) is arranged mainly between the respective drive wheel (131A, 131B) and at least one swivelable wheel (130A, 130B) and comprises holding means (151A, 151B) holding a plurality of brush bristles (152A, 152B) that are comprised in the respective wheel brush device (150A, 150B) and are adapted to bear on the respective drive wheel (131A, 131B). The robotic lawn mower (100) comprises a grass shield (153A, 153B) for each wheel brush device (150A, 150B), each grass shield (153A, 153B) being arranged between the cutting disc (160) and the respective brush bristles (152A, 152B) to prevent cut grass that is ejected from the cutting disc (160) from adhering to the respective brush bristles (152A, 152B).

## Description

### TECHNICAL FIELD

The present disclosure relates to a robotic lawn mower comprising a body, at least one pair of drive wheels, at least one swivelable wheel, at least one rotatable grass cutting disc, having a disc rotation axle that is adapted to rotate about a disc rotation axis, and at least one wheel brush device for each drive wheel.

### BACKGROUND

Robotic lawn mowers, such as for example robotic lawn mowers, are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

A problem associated with robotic lawn mowers is that they normally have drive wheels that adhere cut grass and other types of debris. In order to counteract this problem, cleaning devices are provided, for example in the form of rotating brushes as described in SE 1751516 A1.

It is, however, desired to provide further improvements in order to obtain an enhanced removal of cut grass and other debris from the wheels.

### SUMMARY

The object of the present disclosure is to provide means for efficient removal of cut grass and other debris from the drive wheels of a robotic lawnmower.

This object is achieved by means of a robotic lawn mower comprising a body, at least one pair of drive wheels, at least one swivelable wheel, at least one rotatable grass cutting disc, having a disc rotation axle that is adapted to rotate about a disc rotation axis, and at least one wheel brush device for each drive wheel. Each wheel brush device is arranged mainly between the respective drive wheel and at least one swivelable wheel and comprises holding means holding a plurality of brush bristles that are comprised in the respective wheel brush device and are adapted to bear on the respective drive wheel. The robotic lawn mower comprises a grass shield for each wheel brush device, each grass shield being arranged between the cutting disc and the respective brush bristles to prevent cut grass that is ejected from the cutting disc from adhering to the respective brush bristles.

By means of the grass shields, cut grass that is ejected from the cutting disc is prevented from adhering to the respective brush bristles. This means that the wheel brush devices can be positioned mainly between the drive wheels and the swivelable wheels.

According to some aspects, each brush device is rotatable and the holding means are constituted by corresponding holding rod, and the brush bristles are arranged circumferentially around an outer end of the holding rod. According to some further aspects, for each wheel roller brush device, the brush bristles are arranged circumferentially around an outer end of the holding rod via a bristle holding head.

In this manner, the brush bristles are enabled to either rotate with the respective drive wheel, or to be rotated by a motor device

According to some aspects, each holding rod is connected to a motor device that is adapted to rotate the holding rod along its longitudinal extension, and consequently to rotate the respective brush bristles. This provides an effective cleaning of the drive wheels when cut grass and other debris adhere to the drive wheels.

According to some aspects, each brush device is driven by the corresponding drive wheel. In this manner, an uncomplicated rotation of the respective brush bristles is achieved.

According to some aspects, the holding means are constituted by corresponding holding rod, where each holding rod passes through the respective grass shield. This positions the grass shields at a location where cut grass and other debris that are ejected from the cutting disc are efficiently prevented from reaching the brush bristles.

According to some aspects, each grass shield is connected to the respective holding means. This means that in the case of holding rods that are adapted to rotate along their longitudinal extensions, the grass shields rotate with the respective holding rod. This enables the grass shields to get rid of some adhered cut grass and other debris that have been prevented from reaching the brush bristles.

According to some aspects, the robotic lawn mower has a longitudinal extension, and the drive wheels in each pair are adapted to rotate around a common rotation axis. The respective wheel brush device and the grass cutting disc are mainly positioned at the same side of the common rotation axis along the longitudinal extension.

According to some aspects, each grass shield is mounted to the body. This means that the grass shields can be formed in an uncomplicated manner.

According to some aspects, each brush device is fixed. This means that the brush devices are mounted to the body or a chassis of the robotic lawnmower

### BRIEF DESCRIPTION OF THE DRAWINGS

The present disclosure will now be described more in detail with reference to the appended drawings, where:
- Figure 1: shows a perspective front view of a robotic lawn mower;
- Figure 2: shows a perspective front view of the robotic lawn mower without bumper part;
- Figure 3: shows a side view of the robotic lawn mower;
- Figure 4: shows a side view of the robotic lawn mower without bumper part;
- Figure 5: shows a perspective bottom view of the robotic lawn mower;
- Figure 6: shows a bottom view of the robotic lawn mower;
- Figure 7: shows a schematic illustration of two opposite wheel brush devices;
- Figure 8: shows a detail perspective view of a wheel brush device; and
- Figure 9: shows a schematic overview of the robotic lawn mower.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

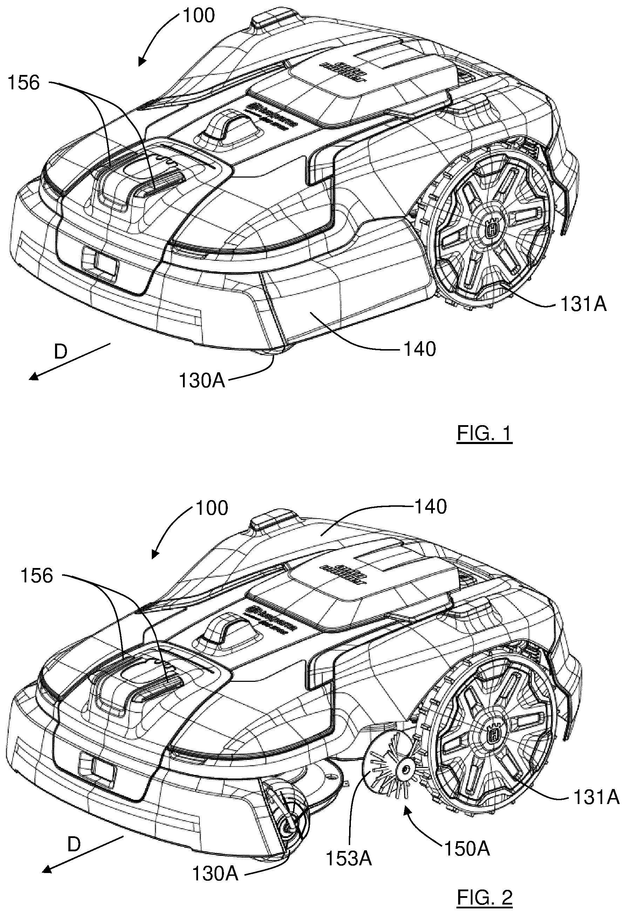

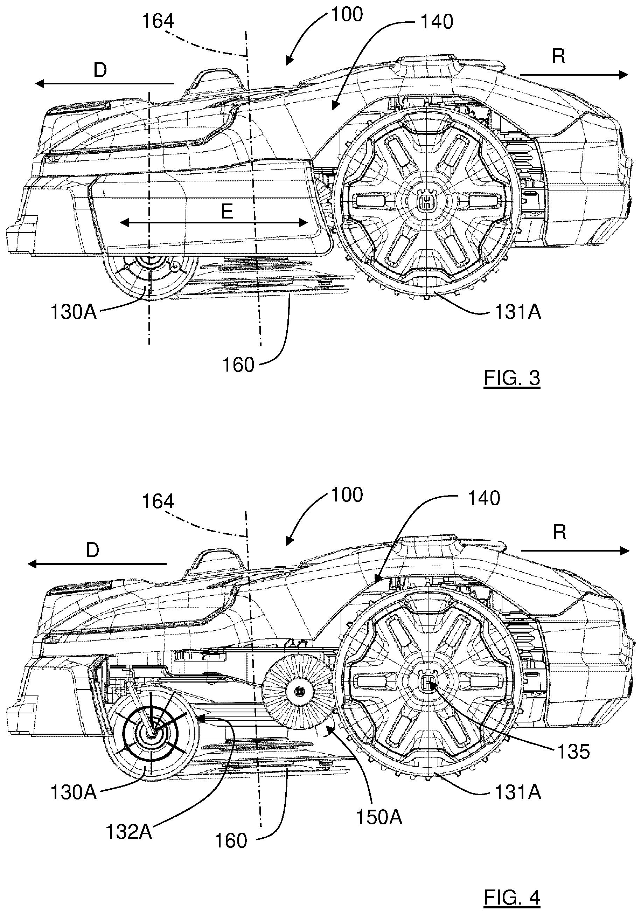

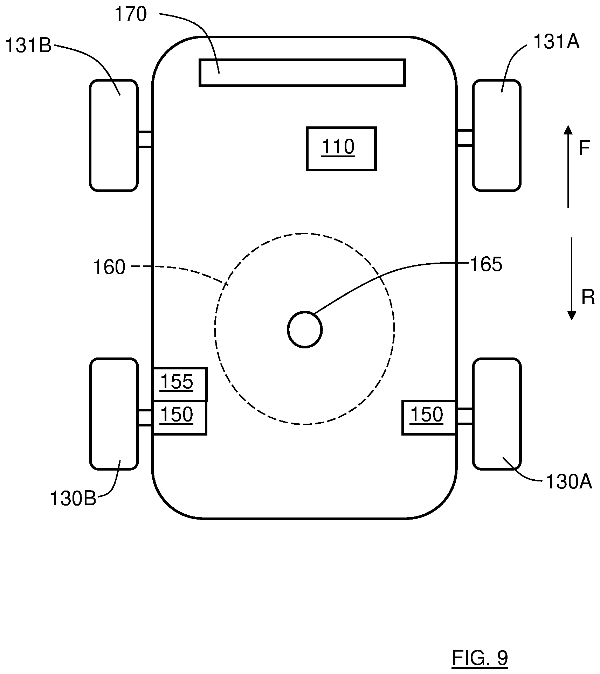

In the following, it is referred to Figure 1-4 and Figure 9. Figure 1 shows a perspective side view of a robotic lawn mower 100, and Figure 2 shows the same view with a side bumper removed for increased visibility. Figure 3 shows a side view of the robotic lawn mower 100, and Figure 4 shows the same view with a side bumper removed for increased visibility. Figure 9 shows a schematic overview of the robotic lawn mower 100.

According to some aspects, the robotic lawnmower 100 comprises a main body part 140 comprising a body 140, at least one pair of drive wheels 131A, 131B, at least one swivelable wheel 130A, 130B, and at least one rotatable grass cutting disc 160, having a disc rotation axle 165 that is adapted to rotate about a disc rotation axis 164.

The robotic lawnmower 100 is adapted for a forward travelling direction F and a reverse travelling direction R. The main body part 140 may for example comprise two or more sub-parts.

According to some aspects, the rotatable cutting disc 160 is driven by a cutter motor 165, and the drive wheels 131A, 131B are drivably connected to an electric drive wheel motor 150.

According to some further aspects, the robotic lawnmower 100 further comprises a rechargeable electric power source 155, such as a battery 155, adapted to provide power to the electric motors 150, 165 and a charging reception arrangement 156, for example in the form of charging skids. The charging reception arrangement 156 is adapted to be electrically connected to a charging transmission arrangement at a charging station (not shown).

According to some aspects, the robotic lawnmower 100 further comprises a control unit 110 and an environmental detection system 170 that for example comprises at least one of a radar transceiver, an ultrasonic device, a Lidar device, a navigation sensor arrangement and/or a boundary wire sensor. According to some further aspects, the control unit 110 is adapted to control and position the robotic lawn mower 100 by means of input derived from the environmental detection system 170.

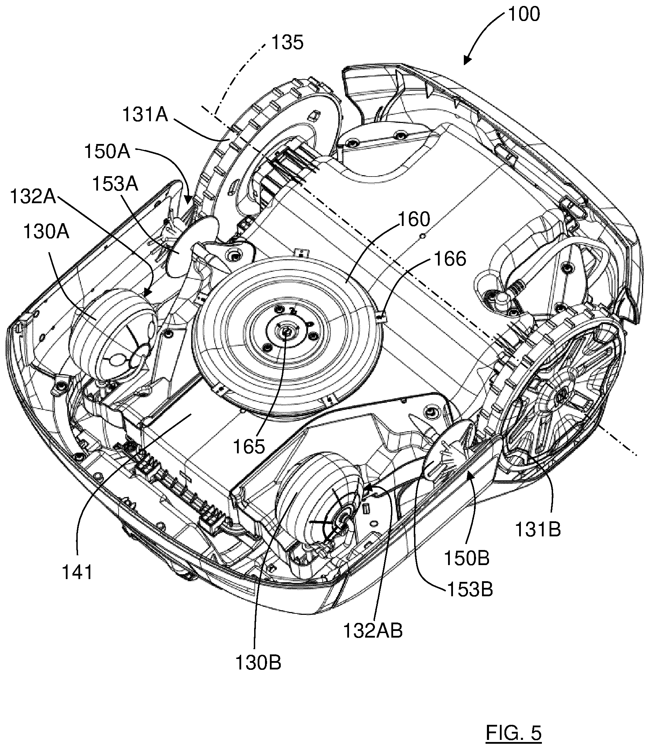

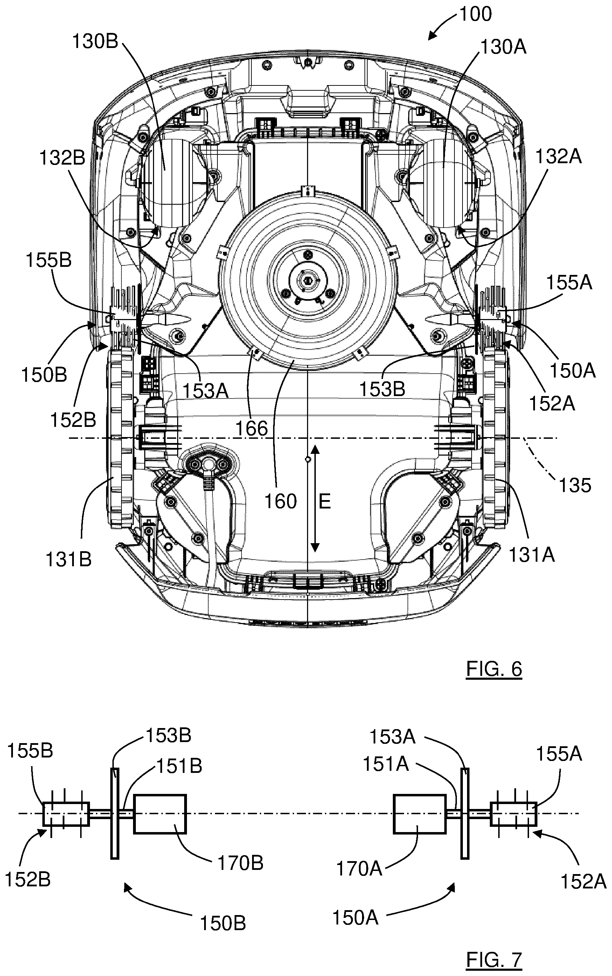

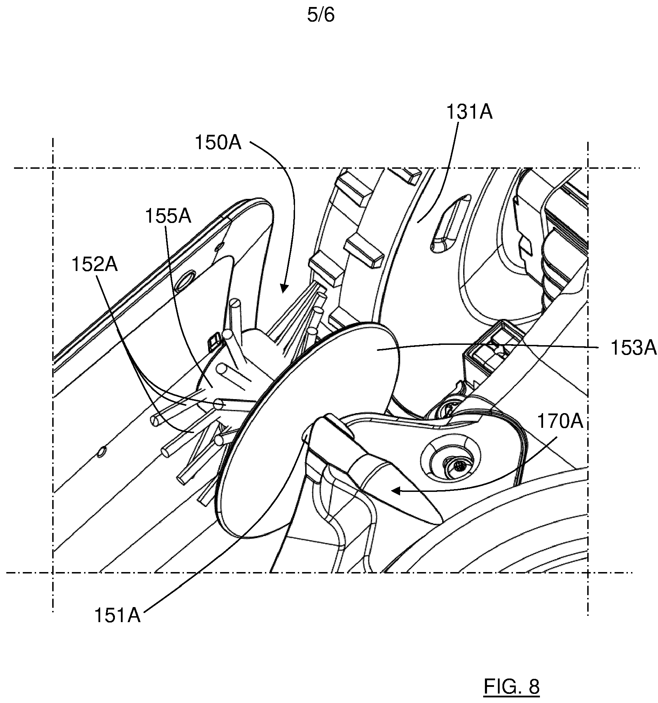

With reference also to Figure 5 that shows a perspective bottom view of the robotic lawnmower 100, Figure 6 that shows a bottom view of the robotic lawnmower 100, Figure 7 that shows a schematic illustration of two opposite wheel brush devices, and Figure 8 that shows a detail perspective view of a wheel brush device, the robotic lawnmower 100 comprises at least one wheel brush device 150A, 150B for each drive wheel 131A, 131B, each wheel brush device 150A, 150B being arranged mainly between the respective drive wheel 131A, 131B and at least one swivelable wheel 130A, 130B and comprising a respective holding rod 151A, 151B holding a respective plurality of brush bristles 152A, 152B that are comprised in the respective wheel brush device 150A, 150B and are adapted to bear on the respective drive wheel 131A, 131B.

According to some aspects, the robotic lawn mower 100 has a longitudinal extension E, and the drive wheels 131A, 131B in each pair are adapted to rotate around a common rotation axis 135.

According to some aspects, the definition that each wheel brush device 150A, 150B being arranged mainly between the respective drive wheel 131A, 131B and at least one swivelable wheel 130A, 130B means that each wheel brush device 150A, 150B is arranged mainly between the common rotation axis 135 and a closest part 132A, 132B of a closest swivelable wheel 130A, 130B, as illustrated in Figure 4 - Figure 6. Mainly means that at least most of each wheel brush device 150A, 150B is arranged in this manner.

According to the present disclosure, the robotic lawn mower 100 comprises a grass shield 153A, 153B for each wheel brush device 150A, 150B, each grass shield 153A, 153B being arranged between the cutting disc 160 and the respective brush bristles 152A, 152B to prevent cut grass that is ejected from the cutting disc 160 from adhering to the respective brush bristles 152A, 152B.

In the illustrated example, there is a first drive wheel 131A, a second drive wheel 131B, a first swivelable wheel 130A and a second swivelable wheel 130B. Furthermore, there is a first wheel brush device 150A that is arranged mainly between the first drive wheel 131A, and the first swivelable wheel 130A, and a second wheel brush device 150B that is arranged mainly between the second drive wheel 131B, and the second swivelable wheel 130B.

Furthermore, in the illustrated example, there is a first grass shield 153A arranged between the cutting disc 160 and the brush bristles 152A of the first wheel brush device 150A, and a second grass shield 153B arranged between the cutting disc 160 and the brush bristles 152B of the second wheel brush device 150B.

By means of the grass shields 153A, 153B, cut grass that is ejected from the cutting disc 160 is prevented from adhering to the respective brush bristles 152A, 152B. This means that the wheel brush devices 150A, 150B can be positioned mainly between the drive wheels 131A, 131B and the swivelable wheels 130A, 130B as described above, enabling an uncomplicated connection of the brush bristles 152A, 152B to a motor device that will be described in an example later.

According to some aspects, each brush device 150A, 150B is rotatable, and the brush bristles 152A, 152B are arranged circumferentially around an outer end of the holding rod 151A, 151B. According to some further aspects, the brush bristles 152A, 152B are arranged circumferentially around an outer end of the holding rod 112A, 112B via a bristle holding head 155A, 155B. In this manner, the brush bristles 152A, 152B are enabled to either rotate with the respective drive wheel 131A, 131B, or to be rotated by a motor device, as disclosed below. Each bristle holding head 155A, 155B may be a part of a holding rod 112A, 112B, or may be a separate part that is attached to a holding rod 112A, 112B. Each bristle holding head 155A, 155B may be formed in the same piece of material as the respective holding rod 112A, 112B. In this context, an outer end of the holding rod 112A, 112B is to be interpreted as an outer end part of the holding rod 112A, 112B, i.e., an outer section of the holding rod 112A, 112B, around which the brush bristles 152A, 152B are arranged.

According to some aspects, each brush device 150A, 150B is driven by the corresponding drive wheel 131A, 131B. In this manner, an uncomplicated rotation of the respective brush bristles 152A, 152B is achieved.

According to some aspects, each holding rod 151A, 151B is connected to a motor device 170 that is adapted to rotate the holding rod 151A, 151B along its longitudinal extension, and consequently the respective brush bristles 152A, 152B. This provides an effective cleaning of the drive wheels 131A, 131B when cut grass and other debris adhere to the drive wheels 131A, 131B.

According to some aspects, each holding rod 51A, 151B passes through the respective grass shield 153A, 153B. This positions the grass shields 153A, 153B at a location where cut grass and other debris that are ejected from the cutting disc 160 are efficiently prevented from reaching the brush bristles 152A, 152B.

According to some aspects, each grass shield 153A, 153B is connected to the respective holding rod 151A, 151B. This means that in the case of holding rods 151A, 151B that are adapted to rotate along their longitudinal extensions, the grass shields 153A, 153B rotate with the respective holding rod 151A, 151B, which enables the grass shields 153A, 153B to get rid of some adhered cut grass and other debris that have been prevented from reaching the brush bristles 152A, 152B.

According to some aspects, the respective wheel roller brush device 150A, 150B and the grass cutting disc 160 are mainly positioned at the same side of the common rotation axis 135 along the longitudinal extension E. This means that each wheel roller brush device 150A, 150B has a protected position, for example with respect to collisions, where grass ejected from the cutting disc 160 is prevented from adhering to the respective brush bristles 152A, 152B by means of the respective grass shield 153A, 153B.

According to some aspects, each grass shield 153A, 153B is mounted to the body 140. This means that the grass shields 153A, 153B can be formed in an uncomplicated manner.

According to some aspects, each brush device 150A, 150B is fixed. This means that the brush devices 150A, 150B are mounted to the body 140 or a chassis 141 of the robotic lawnmower 100 and that instead of a holding rod there can be a holding bracket or similar. For example, the grass shields may be mounted to the respective brush device 150A, 150B, or mounted to another part such as the body 140 or chassis 141.

Generally, each wheel brush device 150A, 150B comprises holding means 151A, 151B holding a plurality of brush bristles 152A, 152B that are comprised in the respective wheel brush device 150A, 150B. This holding means can for example be constituted by a holding rod, a holding bracket or similar.

The present disclosure is not limited to the examples above, but may vary within the scope of the appended claims. For example, there may be one, two or more swivelable wheels 130A, 130B, in the illustrated examples there are two swivelable wheels 130A, 130B.

The brush bristles 152A, 152B can be of many forms and made in different materials. For example, they can be made in a plastic material. The brush bristles 152A, 152B can be formed in the same piece of material as the bristle holding head 155A, 155B.

## Claims

1. A robotic lawn mower (100) comprising a body (140), at least one pair of drive wheels (131A, 131B), at least one swivelable wheel (130A, 130B), at least one rotatable grass cutting disc (160), having a disc rotation axle (165) that is adapted to rotate about a disc rotation axis (164), and at least one wheel brush device (150A, 150B) for each drive wheel (131A, 131B), each wheel brush device (150A, 150B) being arranged mainly between the respective drive wheel (131A, 131B) and at least one swivelable wheel (130A, 130B) and comprising holding means (151A, 151B) holding a plurality of brush bristles (152A, 152B) that are comprised in the respective wheel brush device (150A, 150B) and are adapted to bear on the respective drive wheel (131A, 131B), **characterized in that** the robotic lawn mower (100) comprises a grass shield (153A, 153B) for each wheel brush device (150A, 150B), each grass shield (153A, 153B) being arranged between the cutting disc (160) and the respective brush bristles (152A, 152B) to prevent cut grass that is ejected from the cutting disc (160) from adhering to the respective brush bristles (152A, 152B).

2. The robotic lawn mower (100) according to claim 1, wherein each brush device (150A, 150B) is rotatable and the holding means are constituted by corresponding holding rod (151A, 151B), and where the brush bristles (152A, 152B) are arranged circumferentially around an outer end of the holding rod (151A, 151B).

3. The robotic lawn mower (100) according to claim 2, wherein, for each wheel roller brush device (150A, 150B), the brush bristles (152A, 152B) are arranged circumferentially around an outer end of the holding rod (112A, 112B) via a bristle holding head (155A, 155B).

4. The robotic lawn mower (100) according to any one of the claims 2 or 3, wherein each holding rod (151A, 151B) is connected to a motor device (170) that is adapted to rotate the holding rod (151A, 151B) along its longitudinal extension, and consequently to rotate the respective brush bristles (152A, 152B).

5. The robotic lawn mower (100) according to any one of the claims 2 or 3, wherein each brush device (150A, 150B) is driven by the corresponding drive wheel (131A, 131B).

6. The robotic lawn mower (100) according to any one of the previous claims, wherein each grass shield (153A, 153B) is connected to the respective holding means (151A, 151B).

7. The robotic lawn mower (100) according to any one of the previous claims, wherein the holding means are constituted by corresponding holding rod (151A, 151B), where each holding rod (151A, 151B) passes through the respective grass shield (153A, 153B).

8. The robotic lawn mower (100) according to any one of the previous claims, wherein the robotic lawn mower (100) has a longitudinal extension (E), and where the drive wheels (131A, 131B) in each pair are adapted to rotate around a common rotation axis (135), and where the respective wheel brush device (150A, 150B) and the grass cutting disc (160) mainly are positioned at the same side of the common rotation axis (135) along the longitudinal extension (E).

9. The robotic lawn mower (100) according to any one of the claims 1-5, wherein each grass shield (153A, 153B) is mounted to the body (140).

10. The robotic lawn mower (100) according to claim 1, wherein each brush device (150A, 150B) is fixed.
